**Europäisches Patentamt**

**European Patent Office**

**Office européen des brevets**

(19)

(11) Veröffentlichungsnummer: **0 207 932 B1**

(12) **EUROPÄISCHE PATENTSCHRIFT**

(45) Veröffentlichungstag der Patentschrift: **21.11.91**

(51) Int. Cl.⁵: **B29C 45/53**, B29C 45/50

(21) Anmeldenummer: **86890194.3**

(22) Anmeldetag: **27.06.86**

(54) **Einrichtung zum druckunterstützten Giessen, insbesondere Spritzgiessen von Formkörpern.**

(30) Priorität: **03.07.85 AT 1969/85**

(43) Veröffentlichungstag der Anmeldung:
**07.01.87 Patentblatt 87/02**

(45) Bekanntmachung des Hinweises auf die
Patenterteilung:
**21.11.91 Patentblatt 91/47**

(84) Benannte Vertragsstaaten:
**BE CH DE FR GB IT LI LU NL SE**

(56) Entgegenhaltungen:
**DE-B- 1 105 153**
**GB-A- 1 177 793**

**PATENT ABSTRACTS OF JAPAN, Band 10,
Nr. 2, (M-444)[2059], 8. Januar 1986; & JP-A-60
168 621 (SUMITOMO JUKIKAI KOGYO K.K.)
02-09-1985**

(73) Patentinhaber: **"Maplan" Maschinen und
Technische Anlagen Planungs- und
Fertigungs-Gesellschaft m.b.H.
Nordwestbahnstrasse 12 - 14
A-1200 Wien(AT)**

(72) Erfinder: **Svoboda, Bruno, Ing.
Burggasse 128/38
A-1070 Wien(AT)**

(74) Vertreter: **Haffner, Thomas M., Dr. et al
Patentanwaltskanzlei Dipl.-Ing. Adolf
Kretschmer Dr. Thomas M. Haffner Schottengasse 3a
A-1014 Wien(AT)**

**Beschreibung**

Die Erfindung betrifft eine Einrichtung zum druckunterstützten Gießen, insbesondere Spritzgießen, von Formkörpern bevorzugt geringer Dimension mit hochmolekularen Massen mit einem über mindestens eine Zuführung mit mindestens einer thermisch plastifizierbaren, gegebenenfalls molekularvernetzbaren Masse und/oder mit den Komponenten mindestens eines Polymers versorgbaren, mindestens eine dreh-angetriebene Förder- und Mischschnecke oder Plastifizierschnecke aufweisenden Zubereitungsraum, der druckdicht in mindestens einen Speicherraum für plastifiziertes Polymer übergeht, welcher seinerseits in mindestens eine Formfüll-Leitung zur Beschickung mindestens eines Formhohlraumes oder eines Formwerkzeuges mit Gießmasse mündet, wobei die genannten Bauteile temperatureinstellbar sein können, und einer einen Antrieb aufweisenden Einrichtung zur, bevorzugt in Richtung der Drehachse der Schnekke verlaufenden, Translations-Relativbewegung von Zubereitungsraum und Formfüll-Leitungskörper.

Die DE-B-1 105 153 betrifft eine Spritzgußmaschine zur Verarbeitung thermoplastischer Kunststoffe, welche im wesentlichen einen nach beiden Seiten wirkenden Hohlkolben mit einem Mittelkanal und einem Rückschlagventil aufweist, wobei der Hohlkolben im Stirnteil und im Vorderteil axial verschiebbar gelagert ist. Es sind dabei zwei Einrichtungen für die Translations-Relativbewegung von Hohlkolben einerseits und Stirnteil sowie Vorderteil andererseits erforderlich, wodurch eine aufwendige Konzeption gegeben ist.

Aus der DE-C-17 79 239 ist Spritzgieß-Einrichtung mit einem Dosierzylinder bekannt, dessen eine Gießöffnung aufweisendes Ende der Öffnung einer Spritzgießform anlegbar ist, und in dessen anderem offenen Ende das Ende eines als Hohlkolben ausgebildeten Preßkolbens verschiebbar geführt ist. Im Preßkolben ist eine axial verschiebbare Förderschnecke angeordnet, welche drehbar ist, und mit einer auf sie einen axialen Schub in Richtung Dosierzylinder ausübenden Verschiebevorrichtung versehen ist. Dort sind für den bewegbaren Preßkolben Anschläge zur Begrenzung von dessen Bewegung beim Einspritzen vorgesehen. Es ist also bekannt, über mindestens eine Zuführung mit mindestens einem, vorzugsweise thermisch, plastifizierbaren, gegebenenfalls molekular vernetzbaren, Polymer, Vorpolymer und/oder mit den Komponenten mindestens eines solchen Polymers einen zumindest eine drehangetriebene Förder- und Mischschnecke, insbesondere Plastifizierschnecke, aufweisenden Zubereitungsraum, insbesondere Plastifizierraum, zu versorgen, wobei derselbe druckdicht in mindestens einen Speicherraum für die plastifizierte Masse übergeht, welcher Speicherraum seinerseits in mindestens eine Formfülleitung, vorzugsweise einen Spritzkanal zur Beschickung einer Form, eines Formwerkzeuges od.dgl. mit der zu vergießenden Masse mündet. Vorzugsweise sind alle genannten Bauteile temperatureinstellbar. Weiters weisen die bekannten Einrichtungen einen, beispielsweise fluidmedialen, Antrieb zur bevorzugt in Richtung der Drehachse der Schnecke verlaufenden Translations-Relativbewegung von Zubereitungsraum und Formfülleitung, insbesondere Spritzkanal, auf.

Weiterhin ist es bekannt, beim Verspritzen der Kunststoffmassen eine im Zubereitungsraum im wesentlichen unverschiebliche Schnecke mit diesem kolbenartig im Speicherraum zu bewegen. Nachteil einer solchen Bauweise ist, daß der den Speicher- bzw. Transferraum und den an diesen anschließenden Einspritzkanal aufweisende Körper einen Innen-Querschnitt aufweist, der im wesentlichen mindestens so groß sein muß wie der Außen-Querschnitt des die Schnecke aufweisenden Plastifizier-Zylinders. Insbesondere bei Herstellung von kleinen Teilen, welche geringere Spritzvolumina benötigen, ist es infolge des großen Transfer- Raum- Querschnittes notwendig, die Wegstrecke des von Schneckenzylinder und Schnecke gebildeten Kolbens beim Spritzvorgang gering zu halten. Um sehr genaues Dosieren, wie es beim Spritzgießen gefordert ist, zu erreichen, ist der Steuerungs- und Regelungsaufwand zur genauen Einhaltung eines solchen nur geringen Hubweges beim Spritzvorgang hoch, wobei dennoch Störungsanfälligkeit nicht ganz vermeidbar ist. Bekannt ist es weiters, eine im Zubereitungs- bzw. Plastifizierraum über den Hubweg des Einspritzvorganges axial verschiebbbare, drehbar gelagerte Schnecke kolbenartig in diesem zu bewegen.

Die Erfindung hat sich die Aufgabe gestellt, eine Einrichtung zum druckunterstützten Gießen zu schaffen, welche die beschriebenen Nachteile nicht aufweist, und die Herstellung von Formkörpern verschiedener, insbesondere aber geringer Dimension ermöglicht, wobei der Hubweg beim Einspritzvorgang eine Größe aufweist, bei welcher hohe Präzision ohne hohen Aufwand für die Hubsteuerung erreichbar ist.

Gegenstand der Erfindung ist somit eine Einrichtung zum druckunterstützten Gießen, insbesondere Spritzgießen, von Formkörpern bevorzugt geringer Dimension mit hochmolekularen Massen, mit einem über mindestens eine Zuführung mit mindestens einer thermisch plastifizierbaren, gegebenenfalls molekularvernetzbaren Masse und/oder mit den Komponenten mindestens eines Polymers versorgbaren, mindestens eine dreh-angetriebene Förder- und Mischschnecke oder Plastifizierschnecke aufweisenden Zubereitungsraum, der druckdicht in mindestens einen Speicherraum für plastifizierbares Polymer übergeht, welcher seinerseits in mindestens eine Formfüll-Leitung zur Beschickung mindestens eines Formhohlraumes oder eines Formwerkzeuges mit Gießmasse mündet, wobei die genannten Bauteile temperatureinstellbar sein können, und einer einen Antrieb aufweisenden Einrichtung zur, bevorzugt in Richtung der Drehachse der Schnecke verlaufenden, Translations-Relativbewegung von Zubereitungsraum und Formfüll-Leitungskörper, die dadurch gekennzeichnet ist, daß die Einrichtung einen Zubereitungs- oder Plastifizierraum im Gehäuseteil mit mindestens einem Fortsatz mit in Förderrichtung der Schnecke nachgeordnetem, eine Innenwandung mit zueinander parallele Erzeugende aufweisendem Speicherraum und mindestens einen innerhalb desselben bzw. in demselben gleitdichtend verschiebbaren, und zumindest einen Teil der an das Formwerkzeug anschließbaren Formfüll-Leitung aufweisenden Formfüll-Leitungskörper aufweist, wobei mittels Antriebes der Formfüll-Leitungskörper und der Fortsatz des Gehäuseteiles des Plastifizierraumes zueinander translations-relativbewegbar sind.

Bei dieser Einrichtung ist der Querschnitt des Speicher- bzw. Transferraumes für das jeweils in ein Formwerkzeug einzuspritzende Volumen der Formmasse nicht mehr durch den Außenquerschnitt des Schneckenzylinders nach unten begrenzt. Im einfachsten Falle können der Schneckenzylinder und dessen neuartiger Fortsatz einheitliche Innenquerschnittsflächen aufweisen. Wenn der Fortsatz geringeren Innen-Querschnitt aufweist als der Zubereitungsraum, können bei hohem Hubweg Teile besonders geringer Dimension mit hoher Präzision erhalten werden. Weiters sind, wenn z.B. der Fortsatz und der Plastifizierraum voneinander lösbar sind, einerseits hohe Flexibilität und andererseits auch die Möglichkeit gegeben, wie bisher mit einer Querschnittsfläche des Speicherraumes zu arbeiten, welche die Querschnittsfläche des Zubereitungsraumes übersteigt, womit die Einrichtung nicht auf kleinteilige Formteile beschränkt ist. Besonderer weiterer Vorteil der neuen Einrichtung ist, daß bei ihr das Einspritzen nach dem First-In-First-Out-Prinzip erfolgt. Das als erstes in den Speicherraum und dessen Spritzkanal geförderte Material wird auch als erstes in die Form eingespritzt. Es ist somit durch das gesamte Material eine definierte Verweilzeit im Speicherraum gegeben, womit die Gefahr einer Anvulkanisierung von Masseresten od.dgl. wesentlich verringert ist. Es wird eine Produktion näher dem Scoreh-Punkt, der den Beginn der Vulkanisation bedeutet, ermöglicht, wodurch sich die Zykluszeit im Vergleich zu bisher bekannten Anlagen verkürzt.

Mit den vorher schon erwähnten Vorteilen der Flexibilität ist eine Ausführungsform bevorzugt, bei welcher der Zubereitungsraum und dessen, gegebenenfalls zu diesem unterschiedliche Innen-Querschnittsfläche aufweisender Fortsatz miteinander lösbar verbunden sind.

Eine im Betrieb besonders wenig störungsanfällige und in der Konstruktion weniger aufwendige und auch bei den hohen auftretenden Drücken von bis zu mehreren tausend bar leicht dichtbare Anordnung ist gegeben, wenn mindestens zwei der, gegebenenfalls alle, mit Förder- und Mischschnecke oder Plastifizierschnecke, deren Drehantrieb, Zubereitungsraum oder Plastifizierraum, dessen Fortsatz mit Speicherraum, Formfüll-Leitungsköper und Formfüll-Leitung, insbesondere Einspritzkanal, gebildeten Bauteile im wesentlichen eine gemeinsame Achse aufweisen. Vorteil einer solchen koaxialen Anordnung ist weiters, daß die Fließwege kurz und gerade sind, so daß geringe Druckverluste auftreten, die gemeinsam mit dem hohen Einspritzdruck im Bereich von gegebenenfalls mehreren tausend bar einen hohen Formfülldruck ermöglichen. Dadurch wird das Spritzgießen auch hochviskoser, thermisch empfindlicher Kunststoff- und Gummimischungen wesentlich erleichtert, bzw. erst ermöglicht. Dies ist insbesondere deswegen von hoher wirtschaftlicher Bedeutung, da es damit möglich wird, Mischungen mit besonderen Materialeigenschaften, wie z.B. schwer anspringende Mischungen, zu verarbeiten.

Eine maschinentechnisch wesentliche Vereinfachung mit sich bringend ist es, wenn im Gehäuseteil Zubereitungsraum oder Plastifizierraum und in diesem angeordnete Schnecke in Längserstreckungsrichtung, vorzugsweise Achsrichtung, zueinander im wesentlichen nicht oder höchstens für einen rückflußhemmenden Schließvorgang translations-relativbewegbar sind. Wenn die Schnecke keine oder nur für eine kurze Hub-Bewegung in dem mit ihrem vorderen Ende kooperierenden Sitz eines Rückflußhemmungsorganes eine geringe Axialbewegung durchführt, bleibt das Längen-Durchmesser-Verhältnis praktisch konstant. Dadurch verändert sich auch die von der Schnecke eingebrachte Energie nicht, woraus besonders gleichmäßige Erwärmung und gleichmäßige Viskosität der plastifizierten Masse resultiert.

Für die genaue Reproduzierbarkeit des zu verspritzenden Volumens förderlich, weil auch geringes Rückfließen der plastifizierten Masse in den Schneckenzylinder beim Einspritzvorgang unter hohem Druck im wesentlichen verhindernd, ist es, wenn in vorteilhafter Weise die Förder- und Mischschnecke oder Plastifizierschnecke an bzw. in ihrem dem Fortsatz des Gehäuseteiles des Zubereitungsraumes oder Plastifizierraums zugewandten Endbereich ein Rückflußhemmorgan, insbesondere Rückschlagventil, aufweist oder ihr ein solches zubereitungsraumseitig zugeordnet ist.

Eine besonders stabile Spritzgießeinrichtung kann geschaffen werden, wenn die gegeneinander verschiebbaren Räume für die Zubereitung und Plastifizierung und für Speicherung im wesentlichen etwa innerhalb einer jochartigen Gesamtkonstruktion angeordnet sind, bzw. wenn vorzugsweise der Gehäuseteil des Zubereitungsraumes und dessen, gegebenenfalls zu diesem unterschiedliche Innen-Querschnittsfläche aufweisender Fortsatz miteinander lösbar verbunden sind. Insbesondere wenn die Schnecke im sie enthaltenden Schneckenzylinder also im Zubereitungsraum nicht-axial verschieblich angeordnet ist, ist es vorteilhaft, wenn sie an bzw. in einem Trägerkörper axial druckfest drehbar gelagert ist. Der Trägerkörper bildet vorteilhaft einen Teil einer, wie erwähnten Joch-Konstruktion. In diesem Sinne ist es weiters günstig, den Gehäuseteil des Zubereitungsraumes oder Plastifizierraumes mit einem Trägerkörper, insbesondere einer Trägerplatte, lösbar verbunden auszubilden.

Hohe Funktionstüchtigkeit und Stabilität bei hoher Genauigkeit und schneller Produktionssequenz sowie Reparaturfreundlichkeit ist bei einer vorteilhaften Ausführungsvariante gegeben, gemäß welcher der Zubereitungsraum oder Plastifizierraum mit Fortsatz mit Speicherraum, Förder- und Mischschnecke oder Plastifizier-Schnecke, gegebenenfalls deren Drehantrieb, Trägerkörper oder Trägerplatte und mit ihm bzw. ihr verbundenem Translationsbewegungsantrieb, insbesondere Fluidmediums-Antrieb, eine, vorzugsweise lösbare, gemeinsame Baueinheit bilden, welche mittels des Translationsbewegungs-Antriebes gegenüber einer mit diesem Antrieb ebenfalls verbundenen, vorzugsweise lösbaren Baueinheit mit die Formfüll-Leitung bzw. den Einspritzkanal aufweisendem Formfüll-Leitungs-Körper und dessen Trägerkörper oder Trägerplatte translations-relativbewegbar ist.

Wenn, wie ebenfalls günstigerweise vorgesehen, der den Formfüll-Leitungskörper aufweisende Trägerkörper zumindest während eines Formfüllvorganges oder Spritzvorganges, lagefestlegbar ist, ist eine Bauweise gegeben, bei welcher die Baueinheit mit Zubereitungsraum, Schnecke und deren Antrieb sowie deren Trägerkörper in Richtung zum lagefest an eine Formöffnung anliegenden Einspritzkanal relativbewegt wird.

Genau den Bedürfnissen bei der Formfüllung selbst anpaßbar kann der Einspritzvorgang gestaltet werden, wenn günstigerweise vorgesehen ist, daß der Zubereitungsraum oder Plastifizierraum und die denselben aufweisende Baueinheit relativ zu dem Formfüll-Leitungskörper und zu der denselben aufweisenden Baueinheit weglängen- und geschwindigkeitseinstellbar bewegbar ist. Die Geschwindigkeitseinstellung kann ein eigenes Programm für ein Geschwindigkeitsprofil des Einspritzhubes, genau abgestimmt auf die Gestalt des zu gießenden Formkörpers umfassen.

Im wesentlichen keine zusätzliche Bewegungsenergiezufuhr über eine Hydraulik od.dgl. wird benötigt, wenn der Zubereitungsraum oder Plastifizierraum und die denselben aufweisende Baueinheit mittels die Polymer-Zubereitung in den Speicherraum fördernder Betätigung der Schnecke von dem Formfüll-Leitungskörper und von der denselben aufweisenden Baueinheit weg-bewegbar ist. Durch die Förderung von Volumen der zu plastifizierenden Masse in den Speicherraum erfolgt selbsttätig ein Zurückschieben der Schneckenzylindereinheit mit dem Zubereitungsraum in eine Ausgangsposition.

Um das Füllen des Speicherraumes nach einem Einspritzvorgang bei nötigem Gegendruck vorzunehmen, hat es sich als vorteilhaft erwiesen, wenn die Fluidmediums-Zylinder des Translationsbewegungs-Antriebes eine flußdrosselbare Verbindung ihrer Fluidmedium aufweisenden Arbeitsräume aufweisen. Wird in diesem Fall die Drossel auf geringen Durchfluß gestellt, ist zum Füllen des Speicherraumes ein mittels der Schnekke erhöhter Druck erforderlich.

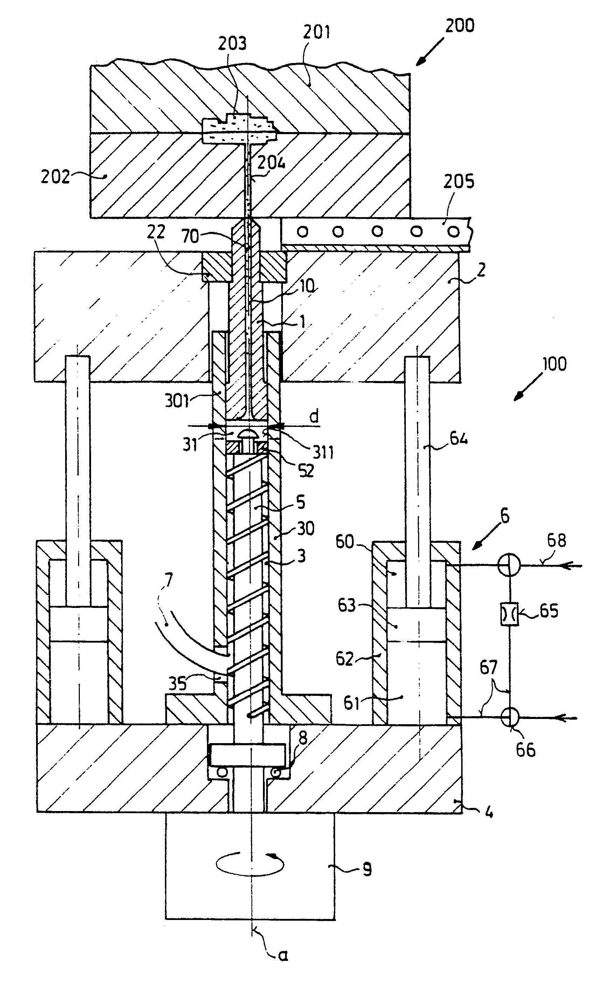

Anhand der Zeichnung wird die Erfindung näher erläutert.

Diese zeigt in schematischer Schnitt-Darstellung eine erfindungsgemäße Spritzgieß-Einrichtung 100, wobei mit einer Trägerplatte 4 ein einen Plastifizierraum 3 enthaltender Schneckenzylinder 30 lösbar verbunden ist, in welchem, in der Trägerplatte 4 mit einem axialdruckfesten Lager 8 gelagert und mit einem ebenfalls am Trägerkörper 4 angeordneten Drehantrieb 9 um die Drehachse a drehbar, eine Förder- und Mischschnecke 5 im Plastifizierraum 3 angeordnet ist. Der Plastifizierraum 3 ist über eine Zufuhröffnung 35 mit einem Band 7 der zu verspritzenden Masse, z.B. eines, gegebenenfalls Komponenten für eine Molekularvernetzung enthaltenden Vorpolymers oder Polymers versorgbar. Es sei angemerkt, daß die Zufuhr der zu verspritzenden Masse ohne weiteres auch durch einen flüssigkeitsdichten Kanal erfolgen kann, z.B. dann, wenn im Falle der Herstellung von Artikeln mit speziellem Silikon-Gummi bzw. -Kautschuk die Ausgangskomponenten in im wesentlichen fließfähigem Zustand vorliegen. Durch Drehen der Schnecke 5 wird das Band der Masse 7 in den Zubereitungsraum 3 eingefördert und dort durch die Bewegung der Schneckenflanken an der Innenwand des Zubereitungsraumes 3 unter hohen Scherkräften einem intensiven Mischvorgang unterworfen, wobei gleichzeitig Förderung in Richtung weg von der Zuführung 35 erfolgt. Infolge der Scherkräfte und des Arbeitsdruckes erfolgt wesentliche Erwärmung der zugeführten Masse 7, sodaß diese dann am bzw. im Bereich des vorderen Endes der Schnecke 5 in fließfähigem Zustand 70 vorliegt, wobei dort auch gegebenenfalls eine Vernetzungsreaktion zur späteren Härtung oder Elastomerbildung beginnen kann. Der den Plastifizierraum 3 aufweisende Zylinder 30 weist an seiner einem zu füllenden Formwerkzeug 200 zugekehrten Seite einen Fortsatz 301 gleichen Durchmessers d auf, welcher einen an den Plastifizierraum 3 anschließenden Speicherraum 31 umschließt. Der Speicherraum 31 ist im wesentlichen von der Innenwandung 311 des Fortsatzes, einem am Ende der Schnecke befindlichen Rückflußverhinderungsorgan 52 und der Stirnfläche eines den Einspritzkanal 10 aufweisenden Formfüll-Leitungskörpers 1 begrenzt, welcher im wesentlichen kolbenartig allseitig an die Innenwand 311 des Fortsatzes 301 druckdicht anliegend in dem Speicherraum 31 translationsverschiebbar angeordnet ist. Der Formfüll-Leitungskörper 1 mit Kanal 10 ist mittels Halterung 22 mit einem weiteren Trägerkörper 2, vorzugsweise lösbar, verbunden und mit seinem distalen Ende an ein einen Formhohlraum 203 aufweisendes Formwerkzeug 200 anschließbar. Besonders bevorzugt ist es, wie in der Figur gezeigt, wenn Zylinder 30. Plastifizierraum 3, Schecke 5, deren Antrieb 9, Zylinderfortsatz 301, Speicherraum 31, Formfüll-Leitungskörper 1 und Einspritzkanal 10 eine gemeinsame Achse a aufweisen, da dabei der von der Spritzmasse 7, 70 zurückzulegende Weg kurz ist. Einzelne bzw. alle bisher angeführten Teile besitzen vorteilhaft - in der Zeichnung nicht näher dargestellte - Einrichtungen zur Wärmeab- bzw. -zufuhr, um eine jeweils einzuhaltende konstante Temperatur der zu verspritzenden Masse zu gewährleisten. Das an den Formfüll-Leitungskörper anschließbare, in der Figur gezeigte Formwerkzeug 200 weist zwei Formhälften 202, 201 auf, deren untere 202 auf einer Temperatur-Konstanthalteeinrichtung 205, z.B. Heizung, welche auf der Trägerplatte 2 der Spritzgieß-Einrichtung 100 angeordnet ist, anliegt und einen koaxial druckdicht an den Einspritzkanal 10 des Formfüll-Leitungskörpers 1 anschließbaren, zum Formhohlraum 203 führenden Angußkanal 204 aufweist. Bei der Spritzgieß-Einrichtung 100 ist der den Formfüll-Leitungskörper 1 tragende Trägerkörper 2 über mit ihm verbundene Zugankerelemente 64 jeweils mit den Kolben 63 von Fluidmediumsantriebsorganen, vorzugsweise Hydraulikantrieben 6 verbunden, deren Zylinder 62 ihrerseits mit der den Plastifizierzylinder 30 mit der Schnecke 5 tragenden Trägerplatte 4 verbunden sind. Die beiden Arbeitsräume 60 und 61 der Zylinder 62 sind über Leitungen 67, mit Mehrweg-Ventilen 66 und einer auf dem Weg zwischen den Arbeitsräumen 60, 61 in der Leitung angeordneten Drossel 65 verbunden . Druck-Mediumszu- und -abfuhr zu nicht gezeigten Aggregaten erfolgt über Leitungen 68. Die zueinander relativbeweglichen Bestandteile der Spritzgieß-Einrichtung sind eine Plastifizierzylinder 30 mit Fortsatz 301 und Förderschnecke 5 tragende Trägerplatte 4 mit Schneckenantrieb 9 und Zylinder 62 des Hydraulikantriebes 6 umfassende Baueinheit, welche zu der Baueinheit mit mittels kolben 63 mit den Zugankerelementen 64 verbundendem Trägerkörper 2, welcher den Formfüll-Leitungskörper 1 trägt, und zumindest beim Formfüllvorgang z.B. an eine feststehende Form 200 anliegend feststehend sein kann, linear relativbeweglich ist, wobei die gesamte Anlage 100 etwa nach Art eines Joches ausgebildet ist. Beim Einspritzvorgang wird durch Betätigung des Hydraulikantriebes unter Ausstoßung der im Speicherraum 31 des Fortsatzes 301 befindlichen plastifizierten Masse mit hohem Druck,z.B. 2000 bar, durch den Spritzkanal 10 in die Form 200 die von der Trägerplatte 4 getragene, mit ihr verbundene Baueinheit gegen die Baueinheit der Trägerplatte 2 hin bewegt, wobei der Fortsatz 301 unter Verkleinerung des Speicherraumes 31 über den ihn gleitdichtend schließenden, kolbenartigen Formfüll-Leitungskörper 1 geschoben wird.

In der Zeichnung ist der Fortsatz 301 als mit dem Plastifizierzylinder 30 einstückig dargestellt, die strichlierte Linie deutet an, daß dieser - selbstverständlich druckdicht - auch lösbar mit dem Plastifizierzylinder 30 verbunden sein kann, wobei dann sein Innen-Durchmesser d und damit die Querschnittsfläche des Speicherraumes 31 andere Größe, aufweisen, z.B. sogar wesentlich kleiner sein kann als die Querschnittsfläche des Plastifizierraumes 3, sodaß bei der gezeigten Anordnung dem Volumen des Speicherraumes 31 nach unten hin sehr kleine Grenzen gesetzt sein können. Auch Vergrößerung des genannten Querschnittes ist problemlos, sodaß hohe Flexibilität gegeben ist.

**Patentansprüche**

1.   Einrichtung zum druckunterstützen Gießen ( 100), insbesondere Spritzgießen, von Formkörpern bevorzugt geringer Dimension mit hochmolekularen Massen, mit einem über mindestens eine Zuführung (35) mit mindestens einer thermisch plastifizierbaren, gegebenenfalls molekularvernetzbaren Masse, und/oder mit den Komponenten mindestens eines Polymers versorgbaren, mindestens eine dreh-angetriebene Förder- und Mischschnecke oder Plastifizierschnecke, aufweisenden Zubereitungsraum (3), der druckdicht in mindestens einen Speicherraum (31) für plastifiziertes Polymer übergeht, welcher seinerseits in mindestens eine Formfüll-Leitung zur Beschickung mindestens eines Formhohlraumes oder eines Formwerkzeuges (200) mit Gießmasse mündet, wobei die genannten Bauteile temperatureinstellbar sein können, und einer einen Antrieb (6) aufweisenden Einrichtung zur, bevorzugt in Richtung der Drehachse der Schnecke (5) verlaufenden, Translations-Relativbewegung von Zubereitungsraum und Formfüll-Leitungskörper (1), dadurch gekennzeichnet, daß die Einrichtung (100) einen Zubereitungs-oder Plastifizierraum (3) im Gehäuseteil (30) mit mindestens einem Fortsatz (301) mit in Förderrichtung der Schnecke (5) nachgeordnetem,eine Innenwandung (311) mit zueinander parallele Erzeugende aufweisendem Speicherraum (31) und mindestens einen innerhalb desselben bzw. in demselben gleitdichtend verschiebbaren, und zumindest einen Teil der an das Formwerkzeug (200) anschließbaren Formfüll-Leitung (10) aufweisenden Formfüll-Leitungskörper (1) aufweist, wobei mittels Antriebes (6) der Formfüll-Leitungskörper (1) und der Fortsatz (301) des Gehäuseteiles (30) des Plastifizierraumes (3) zueinander translations-relativbewegbar sind.

2. Einrichtung nach Anspruch 1, dadurch gekennzeichnet, daß mindestens zwei der, gegebenenfalls alle, mit Förder-und Mischschnecke oder Plastifizierschnecke (5), deren Drehantrieb (9), Zubereitungsraum oder Plastifizierraum (3), dessen Fortsatz (301) mit Speicherraum (31),Formfüll-Leitungskörper (1) und Formfüll-Leitung (10), insbesondere Einspritzkanal, gebildeten Bauteile, im wesentlichen eine gemeinsame Achse (a) aufweisen.

3. Einrichtung nach Anspruch 1 oder 2, dadurch gekennzeichnet, daß im Gehäuseteil (30) Zubereitungsraum oder Plastifizierraum (3) und in diesem angeordnete Schnecke (5) in Längserstreckungsrichtung, vorzugsweise Achs-Richtung (a), zueinander im wesentlichen nicht oder höchstens für einen rückflußhindernden Schließvorgang translations-relativbewegbar sind.

4. Einrichtung nach einem der Ansprüche 1 bis 3, dadurch gekennzeichnet, daß die Förder-und Mischschnecke oder Plastifizierschnecke (5), an bzw. in ihrem, dem Fortsatz (301) des Gehäuseteiles (30) des Zubereitungsraumes oder Plastifizierraumes (3), zugewandten Endbereich ein Rückflußhemmorgan (52), insbesondere Rückschlagventil, aufweist oder ihr ein solches zubereitungsraumseitig zugeordnet ist.

5. Einrichtung nach einem der Ansprüche 1 bis 4, dadurch gekennzeichnet, daß der Gehäuseteil (30) des Zubereitungsraumes (3) und dessen, gegebenenfalls zu diesem unterschiedliche Innen-Querschnittsfläche aufweisender,Fortsatz (301) miteinander lösbar verbunden sind.

6. Einrichtung nach einem der Ansprüche 1 bis 5, dadurch gekennzeichnet,daß die Förder- und Mischschnecke oder Plastifizierschnecke (5) an bzw. in einem Trägerkörper (4) axialdruckfest drehbar gelagert ist.

7. Einrichtung nach einem der Ansprüche 1 bis 6, dadurch gekennzeichnet, daß der Gehäuseteil (30) des Zubereitungsraumes oder Plastifizierraumes mit einem Trägerkörper (4), insbesondere einer Trägerplatte, lösbar verbunden ist.

8. Einrichtung nach einem der Ansprüche 1 bis 7, dadurch gekennzeichnet, daß der Zubereitungsraum oder Plastifizierraum (3) mit Fortsatz (301) mit Speicherraum (31), Förder- und Mischschnecke oder Plastifizierschnecke (5), gegebenenfalls deren Drehantrieb (9), Trägerkörper oder Trägerplatte (4), und mit ihm bzw. ihr verbundenem Translationsbewegungs- Antrieb, insbesondere Fluidmediums-Antrieb (6), eine, vorzugsweise lösbare, gemeinsame Baueinheit bilden, welche mittels des Translationsbewegungs-Antriebes gegenüber einer mit diesem Antrieb ebenfalls verbundenen, vorzugsweise lösbaren. Baueinheit mit die Formfüll-Leitung bzw.den Einspritzkanal (10), aufweisendem Formfüll-Leitungskörper (1) und dessen Trägerkörper oder Trägerplatte (2)-,translations- relativbewegbar ist.

9. Einrichtung nach einem der Ansprüche 1 bis 8, dadurch gekennzeichnet, daß der den Formfüll-Leitungskörper (1) aufweisende Trägerkörper (2) zumindest während eines Formfüllvorganges oder Spritzgießvorganges, lagefestlegbar ist.

10. Einrichtung nach einem der Ansprüche 1 bis 9, dadurch gekennzeichnet, daß der Zubereitungsraum oder Plastifizierraum (3) und die denselben aufweisende Baueinheit relativ zu dem Formfüll-Leitungskörper (1) und zu der denselben aufweisenden Baueinheit weglängen- und geschwindigkeitseinstellbar bewegbar ist.

11. Einrichtung nach einem der Ansprüche 1 bis 10, dadurch gekennzeichnet, daß der Zubereitungsraum oder Plastifizierraum (3) und die denselben aufweisende Baueinheit mittels die Polymer-Zubereitung in den Speicherraum (31) fördernder Betätigung der Schnecke (5) von dem Formfüll-Leitungskörper (1), und von der denselben aufweisenden Baueinheit, wegbewegbar ist.

12. Einrichtung nach einem der Ansprüche 1 bis 11, dadurch gekennzeichnet, daß die Fluidmediums-Zylinder (62) des Translationsbewegungs-Antriebs eine flußdrosselbare Verbindung (67,66,65 ) ihrer Fluidmedium aufweisenden Arbeitsräume ( 60, 61) aufweisen.

**Claims**

1. An apparatus (100) for the pressure-supported moulding, in particular injection-moulding, of moulded bodies which are preferably of small size and high-molecular weight, having a preparation chamber (3) which can be supplied via at least one inlet (35) with at least one thermoplasticisable, optionally molecularly cross-linkable composition and/or with the components of at least one polymer, and which has at least one feed and mixing screw or plasticising screw driven in rotating movement, which preparation chamber (3) merges in a pressure-tight manner with at least one storage chamber (31) for plasticised polymer which, in turn, opens into at least one mould-filling duct for charging at least one mould cavity or a forming die (200) with moulding composition, it being possible for said components to be temperature-adjustable, and a device having drive means (6) for positional motion, preferably extending in the direction of the axis of rotation of the screw (5), relative to the preparation chamber and mould-filling duct member (1), characterised in that the apparatus (100) has a preparation or plasticising chamber (3) in a housing part (30) with at least one extension (301) with a storage chamber (31) which is arranged downstream in the feed direction of the screw (5) and which has an inner wall (311) with mutually parallel generators, at least one mould-filling duct member (1) having a mould-filling duct (10) which is disposed inside said storage chamber (31) or displaceable therein to form a sliding seal, and at least one part of the mould-filling duct member (1) which can adjoin the forming die (200), wherein the mould-filling duct member (1) and the extension (301) of the housing part (30) of the plasticising chamber (3) can be moved so as to undergo a change in position relative to one another by means of the drive means (6).

2. An apparatus according to Claim 1, characterised in that at least two and, optionally, all of the components formed by the feed and mixing screw or plasticising screw (5), its rotary drive (9), preparation chamber or plasticising chamber (3), its extension (301) with the storage chamber (31), mould-filling duct member (1) and moulding filling duct (10), in particular the injection passage, have a substantially common axis (a).

3. An apparatus according to Claim 1 or 2, characterised in that in the housing part (30) the preparation chamber or plasticising chamber (3) and the screw (5) disposed therein are not substantially positionally movable relative to one another in the direction of longitudinal extension, preferably in the direction of axis (a), or at most for a closing operation preventing return flow.

4. An apparatus according to any one of Claims 1 to 3, characterised in that, on or in its end zone nearest the extension (301) of the housing part (30) of the preparation chamber or plasticising chamber (3), the feed and mixing screw or plasticising screw (5) has a member (52) for inhibiting return flow, in particular a non-return valve, or a member of this type, is associated therewith on the preparation chamber side.

5. An apparatus according to any one of Claims 1 to 4, characterised in that the housing part (30) of the preparation chamber (3) and its extension (301), which is optionally of different internal cross-sectional area thereto, can be detachably connected to one another.

6. An apparatus according to any one of Claims 1 to 5, characterised in that the feed and mixing screw or plasticising screw (5) is rotatably mounted in an axially pressure-resistant manner on or in a support member (4).

7. An apparatus according to any one of Claims 1 to 6, characterised in that the housing part (30) of the preparation chamber or plasticising chamber is detachably connected to a support member (4), in particular a support plate.

8. An apparatus according to any one of Claims 1 to 7, characterised in that the preparation chamber or plasticising chamber (3) with the extension (301) with the storage chamber (31), feed and mixing screw or plasticising screw (5), optionally its rotary drive (9), support member or support plate (4), and the drive imparting a change in position connected thereto, in particular fluid drive means (6), form a preferably detachable unitary assembly which by means of the positional movement drive means is positionally movable relative to an assembly which is likewise connected, preferably detachably, to this drive means, comprising the mould-filling duct member (1) having the mould-filling duct or the injection passage (10) and its support member or support plate (2).

9. An apparatus according to any one of Claims 1 to 8, characterised in that the support member (2) having the mould-filling duct member (1) can be located in position at least during a mould-filling operation or injection-moulding operation.

10. An apparatus according to any one of Claims 1 to 9, characterised in that the preparation chamber or plasticising chamber (3) and the assembly including the latter is movable so as to be adjustable axially and at variable rate relative to the mould-filling duct member (1) and to its assembly.

11. An apparatus according to any one of Claims 1 to 10, characterised in that the preparation chamber or plasticising chamber (3) and the assembly having the latter can be moved away, by means of the actuation of the screw (5) feeding the polymer preparation into the storage chamber (31), from the mould-filling duct member (1) and its assembly.

12. An apparatus according to any one of Claims 1 to 11, characterised in that the fluid cylinders (62) of the drive imparting a change in position have working chambers (60, 61) having a connection (67, 66, 65) for its fluid and the flow of which can be throttled.

**Revendications**

1. Dispositif (100) permettant le moulage assisté par la pression, notamment le moulage par injection, de pièces moulées, de préférence de faibles dimensions et de poids moléculaire élevé, comprenant, d'une part, une chambre de préparation (3) qui est agencée de façon à pouvoir être alimentée, par au moins une amenée (35), en au moins une masse thermiquement plastifiable et pouvant éventuellement faire l'objet d'une réticulation moléculaire, et/ou en composants d'au moins un polymère, et qui comporte au moins une vis sans fin de transport et de mélange, ou vis sans fin de préplastification, entraînée en rotation et se prolongeant d'une manière étanche la pression par une chambre d'accumulation (31) destinée au polymère préplastifié et communiquant elle-même avec au moins un conduit de remplissage de moule servant à charger au moins une cavité de moule ou un outil de formage (200) en matière de moulage, les pièces structurelles indiquées pouvant être à température réglable, et, d'autre part, un dispositif comportant un entraînement (6) et permettant un déplacement relatif de translation, s'effectuant de préférence suivant la direction de l'axe de rotation de la vis sans fin (5), entre la chambre de préparation et un bloc à conduit de remplissage de moule (1), caractérisé en ce que le dispositif (100) comprend, d'une part, une chambre de préparation ou de préplastification (3) située dans le boîtier (30) qui comporte au moins un prolongement (301) présentant une chambre d'accumulation (31) qui est disposée à la suite de la vis sans fin (5) dans le sens du transport et offre une paroi intérieure (311) à génératrices parallèles entre elles et, d'autre part, au moins un bloc à conduit de remplissage de moule (1) qui est agencé de façon à pouvoir se déplacer à l'intérieur de ce prolongement (301) ou en coulissement étanche dans ce dernier et comporte au moins une partie du conduit de remplissage de moule (10), ce conduit étant agencé de façon à pouvoir se raccorder à l'outil de formage (200), tandis qu'au moyen d'un entraînement (6), le bloc à conduit de remplissage de moule (1) et le prolongement (301) du boîtier (30) de la chambre de préplastification (3) sont déplaçables en translation relative l'un par rapport à l'autre.

2. Dispositif suivant la revendication 1, caractérisé en ce qu'au moins deux, éventuellement la totalité, des pièces structurelles constituées par la vis sans fin de transport et de mélange ou vis sans fin de préplastification (5), l'entraînement en rotation (9) de cette dernière, la chambre de préparation ou chambre de préplastification (3), le prolongement (301) de cette dernière, qui comporte la chambre d'accumulation (31), le bloc à conduit de remplissage de moule (1) et le conduit de remplissage de moule (10), notamment un canal d'injection, possèdent pratiquement un axe commun (a).

3. Dispositif suivant la revendication 1 ou 2, caractérisé en ce que la chambre de préparation ou chambre de préplastification (3), située dans le boîtier (30), et la vis sans fin (5) disposée dans cette dernière sont agencées de façon à n'être pratiquement pas déplaçables en translation relative l'une vis-à-vis de l'autre suivant une direction s'étendant longitudinalement, de préférence la direction de l'axe (a), ou à ne l'être au maximum que pour une opération de fermeture empêchant un reflux.

4. Dispositif suivant l'une des revendications 1 à 3, caractérisé en ce que, sur ou dans sa zone extrême située du coté du prolongement (301) du boîtier (30) de la chambre de préparation ou chambre de préplastification (3), la vis sans fin de transport et de mélange ou vis de préplastification (5) comporte un organe empêchant le reflux (52), notamment un clapet antiretour, ou en ce qu'un tel organe lui est associé du côté de la chambre de préparation.

5. Dispositif suivant l'une des revendications 1 à 4, caractérisé en ce que le boîtier (30) de la chambre de préparation (3) et son prolongement (301), qui possède éventuellement une section transversale intérieure différente de celle de ce boîtier, sont solidaires l'un de l'autre d'une manière amovible.

6. Dispositif suivant l'une des revendications 1 à 5, caractérisé en ce que la vis sans fin de transport et de mélange ou vis sans fin de préplastification (5) est montée à palier rotatif sur ou dans un bloc de support (4) de façon à résister à la pression axiale.

7. Dispositif suivant l'une des revendications 1 à 6, caractérisé en ce que le boîtier (30) de la chambre de préparation ou chambre de préplastification est solidaire, de manière amovible, d'un bloc de support (4), notamment une plaque de support.

8. Dispositif suivant l'une des revendications 1 à 7, caractérisé en ce que la chambre de préparation ou chambre de préplastification (3), qui présente le prolongement (301) comportant la chambre d'accumulation (31), la vis sans fin de transport et de mélange ou vis sans fin de préplastification (5), éventuellement l'entraînement en rotation (9) de cette dernière, le bloc de support ou plaque de support (4) et l'entraînement de déplacement en translation, notamment un entraînement par agent fluide (6), qui est solidaire de ce bloc ou cette plaque, constituent une unité structurelle commune, de préférence amovible, qui est agencée de façon à être déplaçable en translation relative, au moyen de l'entraînement de déplacement en translation, vis-à-vis d'une unité structurelle, de préférence amovible, qui est solidaire aussi de cet entraînement et comprend le bloc à conduit de remplissage de moule (1), comportant le conduit de remplissage de moule ou le canal d'injection (10), et le bloc ou plaque (2) de support de ce bloc à conduit de remplissage.

9. Dispositif suivant l'une des revendications 1 à 8, caractérisé en ce que le bloc de support (2), comportant le bloc à conduit de remplissage de moule (1), est agencé de façon à pouvoir être immobilisé au moins pendant une opération de remplissage de moule ou opération de moulage par injection.

10. Dispositif suivant l'une des revendications 1 à 9, caractérisé en ce que la chambre de préparation ou chambre de plastification (3) et l'unité structurelle comportant cette dernière sont agencées de façon à être déplaçables, d'une manière réglable en course et vitesse, vis-à-vis du bloc à conduit de remplissage de moule (1) et de l'unité structurelle comportant ce dernier.

11. Dispositif suivant l'une des revendications 1 à 10, caractérisé en ce qu'au moyen d'un actionnement de la vis sans fin (5) faisant avancer la préparation de polymère dans la chambre d'accumulation (31), la chambre de préparation ou chambre de préplastification (3) et l'unité structurelle comportant cette dernière peuvent être éloignées du bloc à conduit de remplissage de moule (1) et de l'unité structurelle comportant ce dernier.

12. Dispositif suivant l'une des revendications 1 à 11, caractérisé en ce que les vérins pour agent fluide (62) de l'entraînement de déplacement en translation comportent, pour leurs chambres de travail (60, 61) contenant l'agent fluide, une liaison (67, 66, 65) qui est agencée de façon à pouvoir faire l'objet d'un étranglement.